# EUROPÄISCHE PATENTANMELDUNG

(11) **EP 1 051 050 A1**
(43) Veröffentlichungstag der Anmeldung: **08.11.2000**
(21) Anmeldenummer: 99109043.2
(22) Anmeldetag: 07.05.1999
(51) Int. Cl.: H04Q 7/22

(54) **Vorrichtung zur Bestimmung der bei einem Teilnehmersuchruf beteiligten Basisstationssubsysteme und Verfahren zum automatischen Aufbau der Vorrichtung**

(71) Anmelder: TELEFONAKTIEBOLAGET LM ERICSSON (publ), 126 25 Stockholm (SE)
(72) Erfinder: Neumann, Roger, 52072 Aachen (DE)
(74) Vertreter: Mohsler, Gabriele

(57) **Zusammenfassung**

Die Erfindung betrifft eine Vorrichtung für ein GSM (Global System for Mobile Communication) Kommunikationssystem das einen GPRS (General Packet Radio Service) Dienst anbietet, zur Bestimmung der bei einem Teilnehmersuchruf auf Leitwegebereichsebene beteiligten Basisstationssubsysteme (Base Station Subsystems). Des Weiteren betrifft die Erfindung ein Verfahren zum Aufbau und/oder zur Aktualisierung der Vorrichtung. Der Aufbau und/ oder die Aktualisierung der Vorrichtung erfolgt in einem GPRS Dienstknoten beispielsweise nach Empfang einer Mitteilung über einen Aufbau, einen Abbau oder eine Änderung virtueller Verbindungen. Dazu werden die in der Mitteilung enthaltenen Informationen ausgewertet und mit bereits vorhandenen Informationen verglichen. Eine weitere Möglichkeit ist die Auswertung von Informationen in Datenpaketen, auch diese Informationen werden mit bereits vorhandenen Informationen verglichen. Anschließend werden gegebenenfalls die Informationen aktualisiert und gespeichert. Im Falle eines Teilnehmersuchrufes auf Leitwegebereichsebene werden die gespeicherten Informationen genutzt, um einem GPRS Dienstknoten die Signalisierungsadressen von Basisstationssubsystemen, die den Leitwegebereich versorgen, mitzuteilen. Die Informationen werden ebenfalls genutzt um zu ermitteln welche Leitwegebereiche von einem GPRS Dienstknoten versorgt werden.

## Beschreibung

Die Erfindung betrifft eine Vorrichtung für ein GSM (Global System for Mobile Communication) Kommunikationssystem das einen GPRS (General Packet Radio Service) Dienst anbietet, zur Bestimmung der bei einem Teilnehmersuchruf auf Leitwegebereichsebene beteiligten Basisstationssubsysteme (Base Station Subsystems). Des Weiteren betrifft die Erfindung ein Verfahren zum Aufbau und/oder zur Aktualisierung der Vorrichtung.

Um ein mobiles Endgerät zu erreichen, das in einem GPRS Dienst eingebucht und betriebsbereit ist, sogenannter Stand-by mode, wird ein Teilnehmersuchruf (Paging) durchgeführt. Ein Teilnehmersuchruf kann für paketvermittelte und leitungsvermittelte Verbindungsanfragen durchgeführt werden. Ein Teilnehmersuchruf für eine paketvermittelte Verbindungsanfrage wird von einem GPRS Dienstknoten (Supporting GPRS Service Node) auf Leitwegebereichsebene durchgeführt. Für eine leitungsvermittelte Verbindungsanfrage wird ein Teilnehmersuchruf in Abhängigkeit vom Netzoperationsmodus (Network Operation mode) durchgeführt. Wird ein GSM Kommunikationssystem das einen GPRS Dienst anbietet im Netzoperationsmodus I (Network Operation mode I) betrieben, wird dieser Teilnehmersuchruf, für eine leitungsvermittelte Verbindung, von einer Mobilfunkvermittlungsstelle (Mobile Services Switching Centre) angefordert und von einem GPRS Dienstknoten durchgeführt. Der Teilnehmersuchruf wird auf Leitwegebereichsebene ausgeführt und kann einen oder mehrere Leitwegebereiche (Routeing Areas) umfassen. Zur Durchführung benachrichtigt der GPRS Dienstknoten jedes an einem Teilnehmersuchruf beteiligte Basisstationssubsystem, indem er eine Nachricht an dessen Netzdiensteinrichtung (Network Service Entity) sendet. Das Basisstationssubsytem oder die Basisstationssubsysteme senden daraufhin eine Teilnehmersuchrufanforderung (Paging Request) in den entsprechenden Leitwegebereichen. Wird das gesuchte Endgerät erreicht, antwortet es einem Basisstationssubsystem mit einer Teilnehmersuchrufantwort (Paging Response). Das Basisstationssubsystem benachrichtigt den GPRS Dienstknoten mit einer Teilnehmersuchrufantwort.
(Stage 2, ETSI Standard GSM 03.60 Version 6.2.0, Release 1997; Juli 1998)

Stand der Technik ist, daß die Information, welche Basisstationssubsysteme an einem Teilnehmersuchruf beteiligt sind, aus einer Zuordnung von Leitwegebereichsidentifikationen (Routeing Area Identity) zu Netzdiensteinrichtungsidentifikationen (Network Service Entity Identifier) gewonnen werden kann.
(ETSI Standard 8.16 TS 101 299 V6.1.0, Annex C, Release 1998; Juli 1998)

Aus dem Stand der Technik ergibt sich nicht, wie Mittel, die eine derartige Zuordnung bestimmen und auswerten, erstellt werden können. Eine Möglichkeit, eine derartige Zuordnung zu erstellen ist die manuelle Eingabe, diese ist kostenintensiv und fehlerträchtig. Ebenfalls nicht aus dem Stand der Technik ersichtlich ist, ob und wie sich derartige Mittel über die Ermittlung der an einem Teilnehmersuchruf beteiligten Basisstationssubsysteme hinaus nutzen lassen.

Demgemäß ist es Aufgabe der Erfindung, eine Vorrichtung und Verfahren zum automatischen Aufbau und/oder Aktualisierung derartiger Mittel zu entwickeln. Des Weiteren ist es Aufgabe der Erfindung, ein Verfahren zu entwickeln, das diese Mittel über die Ermittlung der an einem Teilnehmersuchruf beteiligten Basisstationssubsysteme hinaus nutzt.

Dies wird erfindungsgemäß gelöst durch die Lehre des Patentanspruchs 1, die Lehre des Patentanspruchs 5 und die Lehre des Patentanspruchs 14.

Vorteilhaft erweist sich dabei, daß das Verfahren den automatisierten Aufbau einer Vorrichtung ermöglicht, die einem GPRS Dienstknoten die Netzdiensteinrichtungsidentifikationen der an einem Teilnehmersuchruf auf Leitwegebereichsebene beteiligten Basisstationssubsysteme mitteilt. Dadurch wird, gegenüber einer Vorrichtung, die manuell erstellt und aktualisiert werden muß, Arbeitszeit eingespart und Fehler vermieden.

Im Weiteren erweist es sich als vorteilhaft, daß das Mittel zur Zuordnung einer Leitwegebereichsidentifikation zu Netzdiensteinrichtungsidentifikationen umgehend nach jeder Änderung virtueller Verbindungen aktualisiert und damit zu jedem Zeitpunkt eine gültige Zuordnung in der Vorrichtung vorliegt.

Ebenfalls vorteilhaft ist, daß diese Vorrichtung mit sehr geringem Signalisierungsaufwand erstellt wird und nur geringe Übertragungskapazitäten gebunden werden, die somit für Telekommunikationszwecke frei bleiben.

Weiter vorteilhaft ist, daß die Vorrichtung zur Gewinnung einer Leitwegebereichsidentifikation mit Mitteln zur Datenumsetzung auf einfache Weise realisiert werden kann.

Ebenfalls vorteilhaft ist, daß die Vorrichtung zur Gewinnung einer globalen Zellidentifikation mit Mitteln zur Datenumsetzung auf einfache Weise realisiert werden kann.

Weitere vorteilhafte Ausgestaltungen sind den Ansprüchen 2 bis 13 und 15 bis 26 zu entnehmen.

Vorteilhaft ist gemäß Anspruch 7 und Anspruch 18 die Identifikation eines Basisstationssubsystemes anhand einer Netzdiensteinrichtungsidentifikation, da ein GPRS Dienstknoten diese Netzdiensteinrichtungsidentifikation zur Adressierung der Basisstationssubsysteme nutzt und somit weitere Umsetzungen vermieden werden.

Ebenfalls vorteilhaft ist gemäß Anspruch 8 und Anspruch 19 die Identifikation eines Leitwegebereichs anhand einer Leitwegebereichsidentifikation, da diese Leitwegebereichsidentifikation mit geringem Aufwand zu bestimmen ist.

Ebenfalls vorteilhaft ist gemäß Anspruch 9 bis 11 und 20 bis 22 die Unterscheidung einzelner virtueller Verbindungen, die eine eventuelle Überprüfung gespeicherter Daten erleichtert.

Vorteilhaft ist auch nach Anspruch 3 und Anspruch 23, die Möglichkeit von Mehrfacheinträgen, diese Mehrfacheinträge erlauben einen Aufbau und/oder Aktualisierung des Mittels zur Zuordnung mit sehr wenigen Schritten.

Weitere Vorteile ergeben sich gemäß Anspruch 4 und Anspruch 24 durch die zusätzliche Speicherung eines Zählerwerts, der die Anzahl der Elemente in dem Mittel zur Zuordnung vermindert.

Besonders vorteilhaft ist gemäß Anspruch 13 und Anspruch 26 die Verwendung der in dem Mittel zur Zuordnung gespeicherten Informationen zur Feststellung, welche Leitwegebereiche von einem GPRS Dienstknoten versorgt werden, dies vermeidet den Aufbau, die Speicherung und die Verwaltung redundanter Informationen die ansonsten Arbeitszeit, Speicherplatz und Rechnerleistung verbrauchen.

Im folgenden wird die Erfindung anhand von Ausführungsbeispielen und anhand von Figuren näher erläutert.

Folgende Figuren zeigen:
- Fig. 1:: Signalisierungswege zwischen GPRS Dienstknoten und Basisstationssubsystemen , (Stand der Technik),
- Fig. 2:: schematische Darstellung des Ablaufs bei der Benachrichtigung über Aufbau, Abbau und Änderung einer virtuellen Verbindung,
- Fig. 3a:: Beispiel einer Zuordnungstabelle die zusätzlich eine globale Zellidentifikation enthält,
- Fig. 3b:: Beispiel einer Zuordnungstabelle die Mehrfacheinträge erlaubt,
- Fig. 3c:: Beispiel einer Zuordnungstabelle die zusätzlich einen Zählerwert enthält,
- Fig. 4 :: Umsetzung der Zellidentifikation Cell Identifier zu einer Leitwegebereichsidentifikation RAI,
- Fig. 5:: Umsetzung einer Zellidentifikation Cell Identifier zu einer globalen Zellidentifikation CGI und
- Fig. 6:: schematische Darstellung des Ablaufs bei der Extraktion von Informationen über Aufbau, Abbau und Änderung einer virtuellen Verbindung, aus Datenpaketen,
- Fig. 7:: schematische Darstellung des Ablaufs bei der Benachrichtigung über Aufbau, Abbau und Änderung einer virtuellen Verbindung bei dem eine Tabelle mit Informationen über bestehende virtuelle Verbindungen und ein Mittel zur Zuordnung getrennt von einander realisiert werden.

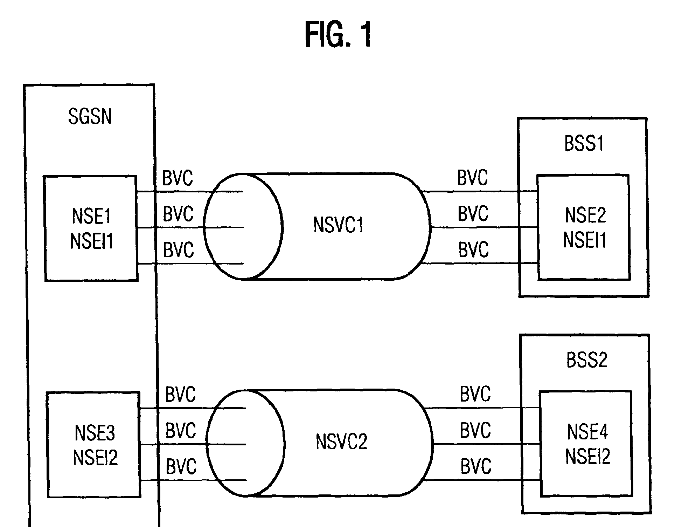

Im folgenden wird ein Signalisierungsweg eines GPRS anbietenden GSM Kommunikationssystems, gemäß des Standes der Technik, erläutert. Hierzu stellt Figur 1 einen Ausschnitt aus einem derartigen Signalisierungsweg, gemäß Standard GSM 08.16 Version 6.1.0, dar.

Auf der Ebene des Netzdienst Protokolls (Network Service Protocol) wird ein GPRS Dienstknoten SGSN durch mehrere Netzdiensteinrichtungen (Network Service Entity) NSE1 und NSE3 repräsentiert. Diese Netzdiensteinrichtungen sind über jeweils eine virtuelle Netzdienstverbindung (Network Service Virtual Connection) NSVC1 oder NSVC2 mit jeweils einer Netzdiensteinrichtung NSE2 oder NSE4 in Basisstationssubsystemen BSS1 oder BSS2 verbunden. Allgemein können ein Basisstationssubsystem und ein GPRS Dienstknoten über mehr als eine virtuelle Verbindung miteinander verbunden werden. Die Netzdiensteinrichtungen der Netzdienstverbindung werden durch ihre Netzdiensteinrichtungsidentifikationen NSEI1 und NSEI2 gekennzeichnet. Dabei haben die miteinander verbundenen Netzdiensteinrichtungen in dem GPRS Dienstknoten SGSN und dem Basisstationssubsystem BSS1 oder BSS2 dieselbe Netzdiensteinrichtungsidentifikation. Auf der darüber liegenden Basisstationssubsystem GPRS Protokollebene dem sogenannten BSSGP layer, werden die Netzdienstverbindungen NSVC1 oder NSVC2 in mehrere virtuelle Verbindungen (Base Station System GPRS Protocol Virtual Connections) BVC aufgespalten, über die beispielsweise Signale übertragen werden

Aufbau und Änderung einer virtuellen Verbindung werden üblicherweise von einem Basisstationssubsytem initiiert und einem GPRS Dienstknoten SGSN mitgeteilt. Für den Abbau einer oder mehrerer virtueller Verbindungen ist in den Standards ist keine explizite Mitteilung vorgesehen. Die Erkennung eines Abbaus einer oder mehrerer virtueller Verbindungen erfolgt üblicherweise implizit, beispielsweise dadurch, daß eine neue virtuelle Verbindungsidentifikation für eine bekannte Zelle verwendet wird. Hieraus wird darauf geschlossen, daß die ursprüngliche virtuelle Verbindung abgebaut wurde. Eine weitere Möglichkeit ist, daß eine bekannte virtuelle Verbindungsidentifikation für eine andere Zelle verwendet wird, woraus der Schluß gezogen wird, daß die virtuelle Verbindung geändert wurde. Ein Abbau kann auch dadurch erkannt werden, daß eine zur Signalisierung genutzte virtuelle Verbindung, in der Regel die virtuelle Verbindung Nummer Null, neu aufgebaut wird. Dies löscht üblicherweise sämtliche virtuellen Verbindungen zwischen einem Basisstationssubsystem und einem GPRS Dienstknoten.

Ein Basisstationssubsystem informiert den GPRS Dienstknoten SGSN zumindest über Aufbau und Änderung virtueller Verbindungen, beispielsweise durch Senden einer sogenannten NM BVC RESET (Network Management BSSGP Virtual Connection Reset) Nachricht oder durch Senden einer sogenannten NM BVC RESET ACK Nachricht in dem Fall, daß ein GPRS Dienstknoten SGSN einen Verbindungsaufbau initiiert hat.
Eine NM BVC RESET Nachricht zeigt entweder an, daß eine Änderung oder ein Aufbau einer oder mehrerer virtueller Verbindungen bereits stattgefunden hat, oder fordert zur deren Durchführung auf. Eine Netzdiensteinrichtungsidentifikation NSEI eines weiterleitenden Basisstationssubsystems BSS ist einem GPRS Dienstknoten SGSN durch die Netzdiensteinrichtungsidentifikation der Netzdiensteinrichtung, die das Paket empfangen hat, bekannt.

Soweit der Stand der Technik, der hier beschrieben wurde, um dem Fachmann die Einordnung und das Verständnis der Erfindung, die im weiteren beschrieben wird, zu erleichtern.

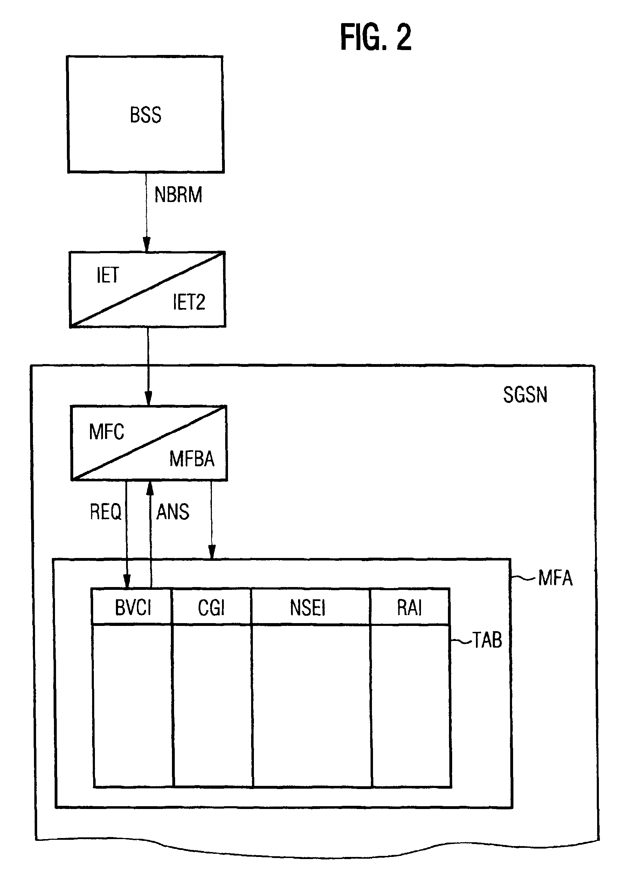

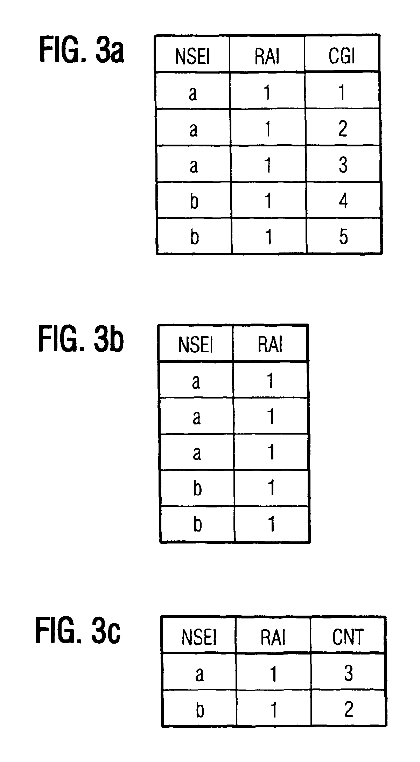

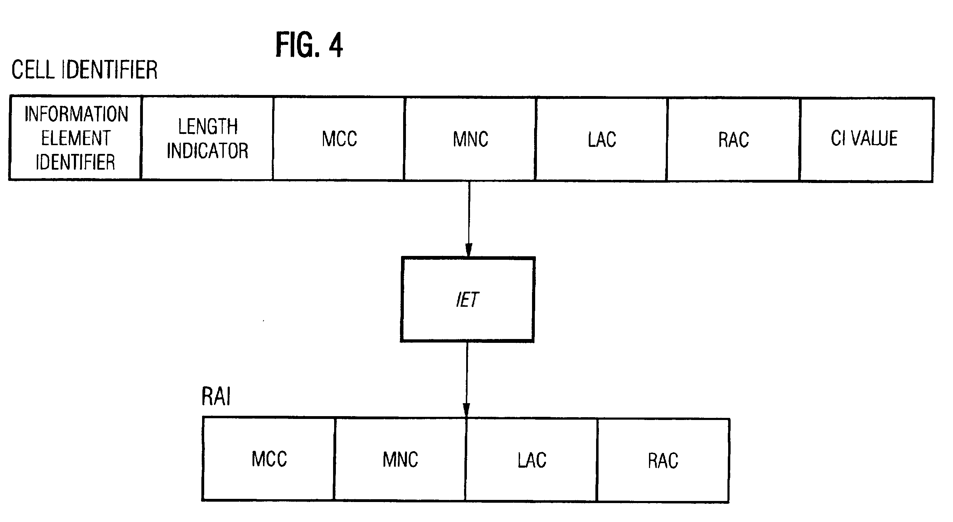

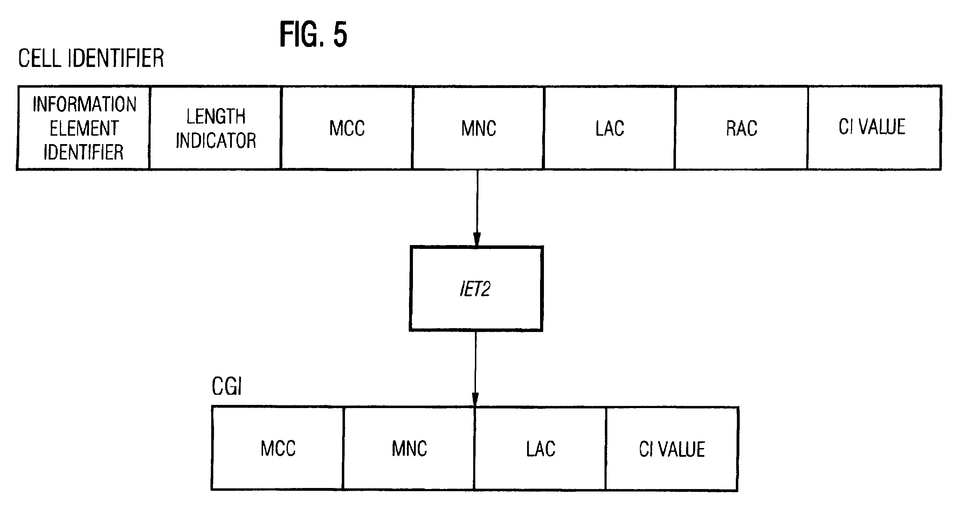

Figur 2 zeigt eine Möglichkeit, wie ein GPRS Dienstknoten SGSN anhand der in einer NM BVC RESET Nachricht NBRM erhaltenen Informationen einen Aufbau, einen Abbau oder eine Änderung einer virtuellen Verbindung feststellt und von einander unterscheidet. Bei Empfang einer NM BVC RESET Nachricht NBRM in dem GPRS Dienstknoten SGSN, in Figur 2 beispielsweise von einem Basisstationssubsystem BSS gesendet, werden die in der NM BVC RESET Nachricht NBRM enthaltenen Informationen von Mitteln zur Datenumsetzung IET und IET2 umgesetzt. Die Datenumsetzung ist optional und wird nur zur Veranschaulichung des Beispiels an dieser Stelle eingefügt. In den Beschreibungen der Figuren 4 und 5 wird sie genauer erläutert. Grundsätzlich kann das Verfahren auch mit den Informationselementen, die in einer NM BVC RESET Nachricht NBRM enthalten sind, durchgeführt werden. Der GPRS Dienstknoten SGSN wertet die Informationen, die in der Nachricht enthalten sind, im Mittel zur Überprüfung und Auswertung MFC aus. Das Mittel zur Überprüfung und Auswertung MFC und ein Mittel zum automatischen Aufbau und zur automatischen Aktualisierung MFBA sind hier beispielhaft in einer Einheit realisiert worden. Zur Überprüfung vergleicht das Mittel zur Überprüfung und Auswertung MFC die Informationen aus der NM BVC RESET Nachricht NBRM mit bereits vorhandenen Informationen. Dazu sendet das Mittel zur Überprüfung und Auswertung MFC eine Anfrage REQ an eine Tabelle TAB, welche Informationen über die betroffenen eine oder mehrere virtuellen Verbindungen bereits vorliegen. Tabellen die Teile dieser Informationen enthalten, sind Stand der Technik und werden beispielsweise im ETSI Standard GSM 08.16 V6.1.0 Release 1998, Annex A in Table A.4 vorgeschlagen. Um den für die Erfindung notwendigen Vergleich durchzuführen, ist eine Leitwegebereichsidentifikation erforderlich. Die aus dem Standard bekannte Tabelle wurde erfindungsgemäß um die Leitwegebereichsinformation RAI erweitert Die Erweiterung ermöglicht es automatisch zu erkennen, wenn eine Zelle einem anderen Leitwegebereich zugeordnet wurde. Die Tabelle TAB liefert die Informationen über betroffene, bereits bestehende virtuelle Verbindungen in einer Nachricht ANS. Weichen die Informationen in der NM BVC RESET Nachricht NBRM für eine bekannte virtuelle Verbindung von den bekannten Informationen ab, so liegt eine Änderung oder ein Abbau einer virtuellen Verbindung vor. Ist eine virtuelle Verbindung noch nicht bekannt, wird darauf geschlossen, daß ein Aufbau dieser virtuellen Verbindung vorliegt. Das Mittel zur Überprüfung und Auswertung MFC leitet im Fall eines Aufbaus, einer Änderung oder eines Abbaus einer oder mehrerer virtueller Verbindungen die relevanten Informationen an das Mittel zum automatischen Aufbau und zur automatischen Aktualisierung MFBA weiter. In dem Beispiel das in Figur 2 dargestellt ist, sind das Informationen ob und welche Einträge für virtuelle Verbindungen entfernt oder neu eingetragen werden sollen, sowie gegebenenfalls die für einen Neueintrag erforderlichen Daten. Welche Daten das Mittel zum automatischen Aufbau und zur automatischen Aktualisierung MFBA in dem Mittel zur Zuordnung MFA speichert, ist von den in dem Mittel zur Zuordnung MFA gespeicherten Informationen abhängig und wird in den Beschreibungen der Figuren 3a, 3b und 3c genauer erläutert.

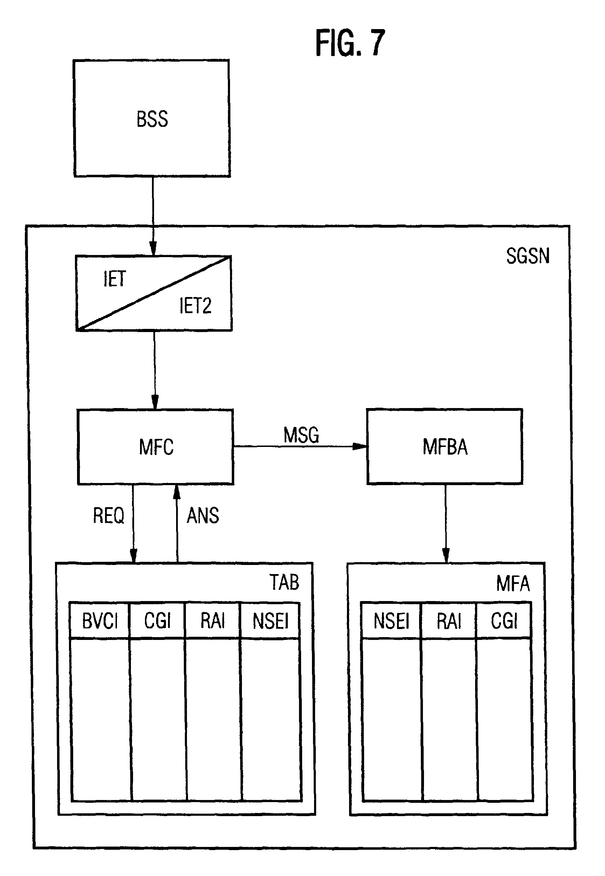

Der in Figur 7 gezeigte Ablauf entspricht vollständig dem, der schon in Figur 2 beschrieben wurde. Die Unterschiede zwischen der Situation in Figur 7 und Figur 2 liegen in der unterschiedlichen Realisierung des Mittels zur Zuordnung MFA. Anstatt das Mittel zur Zuordnung MFA gemeinsam mit einer Tabelle TAB, die Informationen über bestehende virtuelle Verbindungen speichert, umzusetzen, werden sie in der in Figur 7 beschriebenen Umsetzung voneinander getrennt. Entsprechend wird auch das Mittel zur Überprüfung und Auswertung MFC getrennt von dem Mittel zum Aufbau und zur Aktualisierung MFBA realisiert. Dadurch wird der Informationsfluß zwischen dem Mittel zur Zuordnung MFC und dem Mittel zum Aufbau und zur Aktualisierung MFBA anschaulicher. So wird die, in der Beschreibung der Figur 2 erwähnte, Mitteilung zu einer oder mehreren Nachrichten MSG.

Die Nachricht NM BVC RESET ist aus dem GSM Standard 08.18 Version 6.2.0 Release 1997, veröffentlicht Oktober 1998, bekannt. Wie die Leitwegebereichsidentifikation und eine globale Zellidentifikation aus den in einer NM BVC RESET Nachricht enthaltenen Informationen gewonnen werden kann, wird im folgenden erläutert.

Ein in der Nachricht enthaltenes Informationselement Zellidentifikation, ein sogenannter Cell Identifier, wird in dem GPRS Dienstknoten SGSN von einer Vorrichtung IET mit einem Mittel zur Datenumsetzung in eine Leitwegebereichsidentifikation RAI umgesetzt.

Figur 4 zeigt, wie die Vorrichtung IET eine Leitwegebereichsidentifikation RAI aus einer Zellidentifikation Cell Identifier gewinnt.

Die Zellidentifikation Cell Identifier enthält folgende Nachrichtenelemente, ein Nachrichtenelement zur Identifikation des Informationselementes Zellidentifikation beispielsweise eine Informationselementidentifikation INFORMATION ELEMENT IDENTIFIER, ein Nachrichtenelement das die Länge des Informationselements anzeigt, beispielsweise einen Längenindikator LENGTH INDICATOR, ein oder mehrere Nachrichtenelemente die einen Standortbereich, einen Leitwegebereich und eine Zelle weltweit eindeutig identifizieren. Diese Identifikation kann in mehreren Teilen erfolgen. Dies kann zum Beispiel durch eine Identifikation des Landes in dem sich das Netz befindet, beispielsweise eine Länderkennung MCC (Mobile Country Code) und durch eine Identifikation des Netzes innerhalb dieses Landes, beispielsweise eine Netzkennung MNC (Mobile Network Code), umgesetzt werden. Nachdem das Netz weltweit eindeutig identifiziert wurde, müssen der Standortbereich, der Leitwegebereich und die Zelle nur noch innerhalb dieses Netzes eindeutig bestimmt werden. Dies kann für den Standortbereich mit einer Standortbereichskennung LAC (Location Area Code) erreicht werden. Ein Leitwegebereich kann durch eine Leitwegebereichskennung RAC (Routeing Area Code) und eine Zelle durch einen Zellidentitätswert CI (Cell Identity) innerhalb eines Netzes identifiziert werden.

Das Mittel zur Datenumsetzung der Vorrichtung IET erzeugt diese Information, die einen Leitwegebereich weltweit eindeutig identifiziert, beispielsweise eine Leitwegebereichsidentifikation RAI, aus Nachrichtenelementen, die in der Zellidentifikation Cell Identifier enthalten sind. Eine Leitwegebereichsidentifikation RAI läßt sich aus den Nachrichtenelementen Länderkennung MCC, Netzwerkkennung MNC, Standortbereichskennung LAC und Leitwegebereichskennung RAC zusammensetzen.

Figur 5 zeigt wie eine globale Zellidentifikation CGI von der Vorrichtung IET2 aus einer Zellidentifikation gewonnen wird. Das Mittel zur Datenumsetzung der Vorrichtung IET2 erzeugt aus Nachrichtenelementen, die in einer Zellidentifikation enthalten sind, die Information, die eine Zelle weltweit eindeutig identifiziert, beispielsweise eine globale Zellidentifikation CGI. Eine globale Zellidentifikation CGI läßt sich aus den Nachrichtenelementen Länderkennung MCC, Netzwerkkennung MNC, Standortbereichskennung LAC, und Zellidentifizierungswert CI VALUE zusammensetzen.

In einem ersten Ausführungsbeispiel, wird diese Leitwegebereichsidentifikation RAI zusammen mit der Netzdiensteinrichtungsidentifikation NSEI, einer globalen Zellidentifikation (Cell Global Identifier) CGI und einem virtuellen Verbindungsidentifizierer, in einem Mittel zur Zuordnung MFA gespeichert.

Figur 3a zeigt, wie diese Informationen beispielsweise von einem Mittel zur Zuordnung von Leitwegebereichsidentifikationen RAI zu Netzdiensteinrichtungsidentifikationen NSEI zusammen mit der globalen Zellidentifikationen CGI gespeichert wird.
Das Mittel zur Zuordnung MFA ist in diesem Beispiel eine Tabelle. Weitere mögliche Realisierungen können beispielsweise Sortierbäume oder Listen sein, in denen die beschriebenen Informationen gespeichert werden. Sowohl die Reihenfolge der einzelnen Einträge als auch die Reihenfolge der Datenfelder innerhalb eines Eintrags sind beispielhaft und schränken die Erfindung nicht auf die angegebene Reihenfolge ein. Stellt das Mittel zur Überprüfung und Auswertung MFC einen Aufbau einer virtuellen Verbindung fest, informiert es das Mittel zum Aufbau und zur Aktualisierung MFBA, daß ein weiterer Eintrag in dem Mittel zur Zuordnung MFA
einfügt werden soll. Stellt das Mittel zur Überprüfung und Auswertung MFC einen Abbau einer oder mehrerer virtueller Verbindungen fest, fordert es das Mittel zum automatischen Aufbau und zur automatischen Aktualisierung MFBA auf den entsprechenden Eintrag oder die entsprechenden Einträge aus dem Mittel zur Zuordnung MFA zu entfernen. Stellt das Mittel zur Überprüfung und Auswertung MFC eine Änderung einer virtuellen Verbindung fest, fordert es das Mittel zum automatischen Aufbau und zur automatischen Aktualisierung MFBA auf, den veralteten Eintrag zu löschen und einen neuen Eintrag mit den aktuellen Daten zu speichern.

Wenn ein GPRS Dienstknoten einen Teilnehmersuchruf startet, schickt er eine Leitwegebereichsidentifikation RAI an das Mittel zur Zuordnung MFA. Dies liefert sämtliche Netzdiensteinrichtungsidentifikationen NSEI, die mit der angegebenen Leitwegebereichsidentifikation RAI zu finden sind. In dem in Figur 3a dargestellten Fall, wären dies bei der Leitwegebereichsidentifikation RAI 1 die Netzdiensteinrichtungsidentifikationen NSEI a und b mit den globalen Zellidentifikationen CGI 1 bis 5.

In einem zweiten Ausführungsbeispiel werden in dem Mittel zur Zuordnung für jede virtuelle Verbindung eine Netzdiensteinrichtungsidentifikation NSEI und eine Leitwegebereichsidentifikation RAI gespeichert. Figur 3b zeigt beispielhaft den Inhalt einer Tabelle, die eines der möglichen Mittel zur Zuordnung darstellt. Diese Tabelle als Mittel zur Zuordnung MFA kann, analog zu der Darstellung in Figur 2, gemeinsam mit einer Tabelle TAB, die Informationen über bestehende virtuelle Verbindungen speichert, realisiert werden. Sie kann aber auch, analog zu der Darstellung in Figur 7, getrennt von der Tabelle realisiert werden. Bei jedem Aufbau einer virtuellen Verbindung wird eine Kombination aus Netzdiensteinrichtungsidentifikation NSEI und Leitwegebereichsidentifikation RAI gespeichert. Bei jedem Abbau einer virtuellen Verbindung wird eine derartige Kombination entfernt. Eine Änderung einer virtuellen Verbindung stellt eine Kombination aus einem Aufbau und einem Abbau einer virtuellen Verbindung dar, dies bedeutet, daß ein bestehender Eintrag entfernt und durch einen neuen Eintrag ersetzt wird. Durch die Möglichkeit Mehrfacheintragungen für identische Kombinationen vorzunehmen, enthält die Tabelle immer genau so viele Einträge, wie virtuelle Verbindungen bestehen. Der Ablauf bei einem Teilnehmersuchruf entspricht dem des ersten Ausführungsbeispiels. Auf eine Anfrage eines GPRS Dienstknotens wird das Mittel zur Zuordnung anhand einer Leitwegebereichsidentifikation RAI durchsucht. In diesem Beispiel liefert die Durchsuchung bei einer Leitwegebereichsidentifikation RAI 1 die Netzdiensteinrichtungsidentifikationen NSEI a und b.

In einem dritten Ausführungsbeispiel wird in dem Mittel zur Zuordnung neben der Leitwegebereichsidentifikation und der Netzdiensteinrichtungsidentifikation auch ein Zählerwert CNT gespeichert. Figur 3c zeigt eine Tabelle, die eine der möglichen Umsetzungen des Mittels zur Zuordnung darstellt. Dieser Zählerwert CNT gibt die Anzahl der virtuellen Verbindungen mit identischer Leitwegebereichsidentifikation RAI und Netzdiensteinrichtungsidentifikation NSEI wieder. In dem Fall, daß ein Zählerwert gespeichert wird, muß das Mittel zur Zuordnung MFA getrennt von einer Tabelle TAB, die Informationen über bestehende virtuelle Verbindungen speichert, realisiert werden. Wird eine neue virtuelle Verbindung aufgebaut, wird dieser Zählerwert CNT um eins erhöht oder, falls es sich um eine Kombination aus Netzdiensteinrichtungsidentifikation NSEI und Leitwegebereichsidentifikation RAI handelt für die noch kein Eintrag besteht, wird ein neuer Eintrag erstellt. Analog wird beim Abbau einer virtuellen Verbindung der Zählerwert CNT um eins verringert. Für den Fall, daß keine virtuelle Verbindung für eine bestimmte Kombination aus Leitwegebereich und Netzdiensteinrichtungsidentifikation mehr existiert, sind zwei Lösungen möglich. Entweder wird der entsprechende Eintrag entfernt oder der entsprechende Zählerwert CNT wird auf Null gesetzt. In diesem Beispiel wird der entsprechende Eintrag entfernt und gegebenenfalls neu aufgesetzt. Eine Änderung einer virtuellen Verbindung stellt eine Kombination aus einem Aufbau und einem Abbau einer virtuellen Verbindung dar. Das bedeutet, daß der Zählerwert für die bisherige Kombination aus Leitwegebereich RAI und Netzdiensteinrichtungsidentifikation NSEI um eins verringert, beziehungsweise der Eintrag entfernt wird, und für die aktuelle Kombination der Zählerwert CNT um eins erhöht, beziehungsweise ein neuer Eintrag erstellt wird. Der Ablauf bei einem Teilnehmersuchruf entspricht dem des zweiten Ausführungsbeispiels. Auf eine Anfrage eines GPRS Dienstknotens wird das Mittel zur Zuordnung anhand einer Leitwegebereichsidentifikation RAI durchsucht. In diesem Beispiel liefert die Durchsuchung bei einer Leitwegebereichsidentifikation RAI 1 die Netzdiensteinrichtungsidentifikationen NSEI a und b. Der Zählerwert CNT ist für einen GPRS Dienstknoten nicht von Belang und wird daher nicht übermittelt.

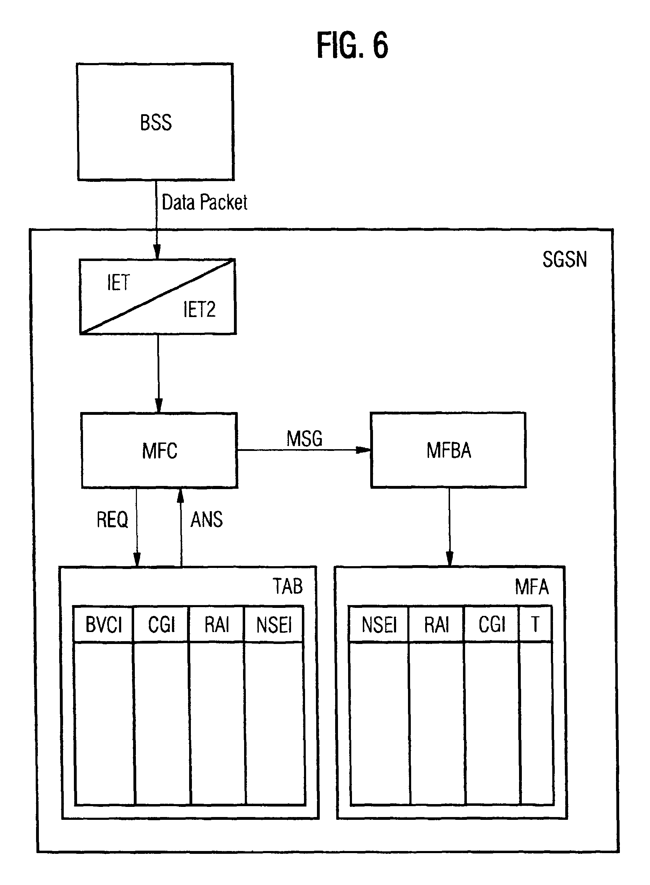

In einem vierten Ausführungsbeispiel, werden Informationen die sich aus übertragenen Datenpaketen gewinnen lassen zum Aufbau und zur Aktualisierung des Mittels zur Zuordnung genutzt.
Dazu werden Pakete, die von einem Basisstationssubsystem BSS an einen GPRS Dienstknoten SGSN weitergeleitet wurden, untersucht. Figur 6 zeigt einen möglichen Weg, wie eine derartige Untersuchung durchgeführt werden kann und anhand der Ergebnisse das Mittel zur Zuordnung aufgebaut und aktualisiert werden kann. Ein Basisstationssubsystem BSS leitet ein Datenpaket Data Packet an einen GPRS Dienstknoten SGSN weiter. Jedes Paket enthält eine Zellidentifikation aus der sich, mit den in Figur 4 und Figur 5 beschriebenen Vorrichtungen mit Mitteln zur Datenumsetzung IET und IET2, eine Leitwegebereichsidentifikation RAI und eine globale Zellidentifikation CGI gewinnen lassen. Da Pakete nur über bestehende Verbindungen von einem Basisstationssubsystem BSS zu einem GPRS Dienstknoten SGSN gesendet werden können, identifiziert ein in einem Paket enthaltener virtuelle Verbindungsidentifizierer BVCI eine derartige Verbindung. Eine Netzdiensteinrichtungsidentifikation NSEI eines weiterleitenden Basisstationssubsystems BSS ist einem untersuchenden GPRS Dienstknoten SGSN durch die Netzdiensteinrichtungsidentifikation der Netzdiensteinrichtung, die das Paket empfangen hat, bekannt. Die virtuelle Verbindungsidentifikation BVCI, die globale Zellidentifikation CGI, die Leitwegebereichsidentifikation RAI und die Netzdiensteinrichtungsidentifikation NSEI, die aus den im Datenpaket enthaltenen Informationen gewonnen wurden, werden von dem Mittel zur Überprüfung und Auswertung MFC mit bereits gespeicherten Informationen verglichen. Dazu sendet das Mittel zur Überprüfung und Auswertung MFC eine Anfrage REQ an eine Tabelle TAB, welche Informationen über die betroffene virtuelle Verbindung bereits vorliegen. Tabellen die Teile dieser Informationen enthalten, werden beispielsweise im ETSI Standard GSM 08.16 V6.1.0 Release 1998, veröffentlicht September 1998, Annex A als Table A.4 vorgeschlagen. Zur erfindungsgemässen Verwendung der Tabelle muß diese noch um eine Information die einen Leitwegebereich identifiziert erweitert werden. Die Erweiterung ermöglicht es automatisch zu erkennen, wenn eine Zelle einem anderen Leitwegebereich zugeordnet wurde. In diesem Beispiel wird ein Leitwegebereich durch eine Leitwegebereichsidentifikation RAI identifiziert. Die Tabelle TAB liefert die angeforderten Informationen in einer Nachricht ANS.
Weichen die Informationen von den gespeicherten Informationen ab, wird daraus auf eine Änderung einer virtuellen Verbindung geschlossen. Sind die Informationen neu, so liegt ein Neuaufbau einer virtuellen Verbindung vor.
Auf einen Abbau einer virtuellen Verbindung wird geschlossen, wenn seit der letzten Überprüfung eines Eintrags eine bestimmte Zeit verstrichen ist.

Das Mittel zur Überprüfung und Auswertung MFC schickt eine Nachricht MSG an das Mittel zum Aufbau und zur Aktualisierung MFBA. Diese Nachricht MSG enthält zumindest Informationen ob ein Neueintrag für eine virtuelle Verbindung vorgenommen werden muß oder ob ein bestehender Eintrag gelöscht werden soll. Soll ein Eintrag entfernt werden, enthält die Nachricht MSG Informationen die einen Eintrag eindeutig identifizieren, beispielsweise einen globalen Zellidentifizierer CGI. Soll ein Eintrag neu erstellt werden, dann enthält die Nachricht MSG zumindest eine Netzdiensteinrichtungsidentifikation NSEI, eine Leitwegebereichsidentifikation RAI und eine globale Zellidentifikation CGI. Im Falle einer Änderung einer virtuellen Verbindung, wird der ursprüngliche Eintrag von dem Mittel zum Aufbau und zur Aktualisierung MFBA in dem Mittel zur Zuordnung MFA gelöscht und ein neuer Eintrag für die aktuelle virtuelle Verbindung aufgesetzt. In diesem Fall sendet das Mittel zur Überprüfung und Auswertung MFC für jeden Neueintrag und für jedes Entfernen eines Eintrages eine Nachricht MSG. Ein Eintrag in dem Mittel zur Zuordnung umfasst in diesem Ausführungsbeispiel eine globale Zellidentifikation CGI, eine Leitwegebereichsidentifikation RAI, eine Netzdiensteinrichtungsidentifikation NSEI und eine Zeitidentifikation T. Diese Zeitidentifikation T gibt an, zu welchem Zeitpunkt der Eintrag zum letzten mal überprüft wurde. Dieser Zeitpunkt entspricht dem Zeitpunkt, zu dem das letzte Datenpaket über diese virtuelle Verbindung empfangen wurde. Falls dieser Zeitpunkt länger als einen bestimmten Schwellenwert zurück liegt, wird von einem Abbau der virtuellen Verbindung ausgegangen. Diese Zeitidentifikation T kann von dem Mittel zur Zuordnung selbständig eingefügt werden. Eine Möglichkeit die Zeit seit einer Übertragung zu kontrollieren besteht darin, bei einem Eintrag oder einer Überprüfung eines Eintrages die Zeitidentifikation auf einen Schwellwert zu setzen. In regelmäßigen Intervallen werden dann die Zeitidentifikationen aller Einträge um eins verringert. Hat ein Eintrag den Zeitidentifikationswert null erreicht, wird er entfernt.

Liegt ein Aufbau einer virtuellen Verbindung vor, wird ein neuer Eintrag von dem Mittel zum Aufbau und zur Aktualisierung MFBA in dem Mittel zur Zuordnung MFA aufgesetzt. Im Falle eines Abbaus einer virtuellen Verbindung, wird der Eintrag von dem Mittel zum Aufbau und zur Aktualisierung MFBA in dem Mittel zur Zuordnung MFA gelöscht. Das Mittel zur Zuordnung kann beispielsweise eine oder mehrere Tabellen, ein oder mehrere Sortierbäume sowie eine oder mehrere Listen oder Kombinationen aus den genannten Mitteln sein.

Die Erfindung ist nicht auf die in den Beispielen gezeigten Ausführungen beschränkt, sondern kann unter anderem auch durch Kombinationen aus den in den Beispielen vorgestellten Ausführungen realisiert werden.
Insbesondere kann eine Kombination aus einer Ausführung, die unter Nutzung der NM BVS RESET und NM BVC RESET ACK Nachrichten Mittel zur Zuordnung aufbaut und aktualisiert, und einer Ausführung, die unter Verwendung der in Datenpaketen enthaltenen Informationen Mittel zur Zuordnung aufbaut und aktualisiert, sinnvoll sein.

## Patentansprüche

1. Verfahren zum Aufbau und zur Aktualisierung von Mitteln zur Bestimmung von bei einem Teilnehmersuchruf auf Leitwegebereichsebene beteiligten Basisstationssubsystemen, für ein GSM (Global System for Mobile Communication) Kommunikationssystem, das GPRS (General Packet Radio Service) anbietet, mit folgenden Schritten:
- Auswertung von Signalen die ein Basisstationssubsystem (BSS) sendet und Ermittlung einer Identifikation des Basisstationssubsystems (BSS),
- Erkennung von Aufbau, Abbau und Änderung einer oder mehrerer virtueller Verbindungen (BVC) anhand der Auswertung und der Ermittlung,
- Vergleich mit bereits vorhandenen Informationen über eine oder mehrere virtuelle Verbindungen (BVC), falls sich die Erkennung nicht anhand der Auswertung und der Ermittlung durchführen läßt,
- Identifikation einer oder mehrerer aufzubauender, abzubauender und zu verändernder virtueller Verbindungen anhand von Informationen die bei der Auswertung, der Ermittlung, der Erkennung und dem Vergleich gewonnen werden,
- Löschen, Speichern oder Aktualisieren von Informationen über die eine oder mehrere virtuelle Verbindung (BVC), die eine oder mehrere Informationen enthalten, die ein Basisstationssubsystem (BSS), das an der virtuellen Verbindung beteiligt ist, und einen Leitwegebereich (RA), in dem eine Zelle liegt die an der virtuellen Verbindung beteiligt ist, identifizieren,.

2. Verfahren nach Anspruch 1, mit den Schritten,
- Auswertung von Informationen aus einem oder mehreren Datenpaketen, die von einem Basisstationssubsystem (BSS) gesendet werden sowie einer Identifikation des Basisstationssubsystemes, und
- Vergleich mit bereits vorhandenen Informationen über eine oder mehrere virtuelle Verbindungen (BVC).

3. Verfahren nach Anspruch 1 oder 2, bei dem für identische Kombinationen aus einer oder mehreren Informationen, die einen Leitwegebereich und ein Basisstationssubsystem identifizieren, mehrfache Einträge in einem Mittel zur Zuordnung vorgenommen werden.

4. Verfahren nach Anspruch 1 oder 2, bei dem für jede Kombination aus einer oder mehreren Informationen die einen Leitwegebereich und ein Basisstationssubsystem identifizieren, in einem Mittel zur Zuordnung ein Zählerwert (CNT) gespeichert wird.

5. Verfahren nach Anspruch 1 bei dem anstelle von Informationen die in Signalen enthalten sind, Informationen die in Datenpaketen enthalten sind ausgewertet werden und mit bereits vorhandenen Informationen über virtuelle Verbindungen (BVC) verglichen werden.

6. Verfahren nach Anspruch 5, mit den Schritten
- Auswertung von Informationen aus Signalen die ein Basisstationssubsystem (BSS) sendet und,
- Vergleich mit bereits vorhandenen Informationen über eine oder mehrere virtuelle Verbindungen (BVC), falls die Auswertung für die Erkennung nicht ausreicht.

7. Verfahren nach einem der Ansprüche 1 bis 6, bei dem ein Basisstationssubsystem anhand einer Netzdiensteinrichtungsidentifikation eindeutig identifiziert wird.

8. Verfahren nach einem der Ansprüche 1 bis 7, bei dem ein Leitwegebereich anhand einer Leitwegebereichsidentifikation eindeutig identifiziert wird.

9. Verfahren nach einem der Ansprüche 1 bis 8, bei dem eine Information gespeichert wird, die eine virtuelle Verbindung identifiziert.

10. Verfahren nach Anspruch 1 bis 9, bei dem virtuelle Verbindungen anhand einer Information, die eine Zelle eindeutig identifiziert, unterschieden werden.

11. Verfahren nach einem der Ansprüche 1 bis 10, bei dem eine Zelle anhand einer globalen Zellidentifikation identifiziert wird.

12. Verfahren nach einem der Ansprüche 1 bis 11, bei dem für jede Kombination aus einer oder mehreren Informationen die einen Leitwegebereich und ein Basisstationssubsystem identifizieren, ein Zeitüberwachungswert (T) gespeichert wird.

13. Verfahren nach einem der Ansprüche 1 bis 12, bei dem anhand der im Mittel zur Zuordnung gespeicherten Informationen ermittelt wird, welche Leitwegebereiche ein Versorgungsbereich eines GPRS Dienstknotens umfasst.

14. Vorrichtung für ein GSM (Global System for Mobile Communication) Kommunikationssystem, das GPRS (General Packet Radio Service) anbietet
**gekennzeichnet durch**,
Mittel zum automatischen Aufbau und/oder zur automatischen Aktualisierung von einem Mittel zur Zuordnung, das einem GPRS Dienstknoten, der einen Teilnehmersuchruf auf Leitwegebereichsebene durchführt, eine oder mehrere Informationen sendet, die ein oder mehrere am Teilnehmersuchruf beteiligte Basisstationssubsysteme identifizieren.

15. Vorrichtung nach Anspruch 14, mit einem Mittel zur Überprüfung und Auswertung, das aus einem oder mehreren Signalen mit Informationen über virtuelle Verbindungen, diese Informationen und eine Identifikation des Basisstationssubsystems, das die ein oder mehreren Signale sendete, auswertet und mit Informationen über bestehende virtuelle Verbindungen vergleicht, falls die Informationen für eine Erkennung und Unterscheidung von Aufbau, Änderung und Abbau einer oder mehrerer virtueller Verbindungen nicht ausreichen, sowie aufzubauende, abzubauende und zu ändernde virtuelle Verbindungen identifiziert und dem Mittel zum automatischen Aufbau und/oder zur automatischen Aktualisierung mitteilt, welche Maßnahmen in dem Mittel zur Zuordnung vorgenommen werden müssen.

16. Vorrichtung nach Anspruch 15, bei der das Mittel zur Überprüfung und Auswertung Informationen die in Datenpaketen enthalten sind, auswertet.

17. Vorrichtung nach einem der Ansprüche 14 bis 16, bei der das Mittel zur Zuordnung ein Basisstationssubsystem anhand einer Netzdiensteinrichtungsidentifikation zuordnet.

18. Vorrichtung nach einem der Ansprüche 14 bis 17, bei der das Mittel zur Zuordnung einen Leitwegebereich anhand einer Leitwegebereichsidentifikation zuordnet.

19. Vorrichtung nach einem der Ansprüche 14 bis 18, bei der das Mittel zur Zuordnung eine oder mehrere Informationen die ein Basisstationssubsystem und einen Leitwegebereich bestimmen und eine oder mehrere Informationen, die einzelne virtuelle Verbindungen unterscheiden, speichert.

20. Vorrichtung nach Anspruch 19, die virtuelle Verbindungen anhand einer Information, die eine Zelle eindeutig identifiziert, unterscheidet.

21. Vorrichtung nach Anspruch 20, die eine Zelle anhand einer globalen Zellidentifikation identifiziert.

22. Vorrichtung nach einem der Ansprüche 14 bis 18, bei der das Mittel zur Zuordnung mehrfache Einträge identischer Kombinationen einer oder mehrerer Informationen, die ein Basisstationssubsystem und einen Leitwegebereich bestimmen, speichert.

23. Vorrichtung nach einem der Ansprüche 14 bis 18, bei der das Mittel zur Zuordnung einen Zählerwert (CNT) speichert.

24. Vorrichtung nach einem der Ansprüche 14 bis 23, bei der das Mittel zur Zuordnung einen Zeitüberwachungswert (T) speichert.

25. Vorrichtung nach einem der Ansprüche 14 bis 24, mit Mitteln zur Feststellung, die, anhand der von dem Mittel zur Zuordnung gespeicherten Informationen, feststellen, welche Leitwegebereiche ein Versorgungsbereich eines GPRS Dienstknoten umfasst.
